# EUROPEAN PATENT APPLICATION

(11) **EP 3 416 111 A1**
(43) Date of publication of application: **19.12.2018**
(21) Application number: 17176017.6
(22) Date of filing: 14.06.2017
(51) Int. Cl.: G06Q 10/06

(54) **WORKFLOW MANAGEMENT**

(71) Applicant: Siemens Aktiengesellschaft, 80333 München (DE)
(72) Inventor: Cuellar, Jorge, 82065 Baierbrunn (DE); Kasinathan, Prabhakaran, 81549 München (DE)

(57) **Abstract**

A workflow system (100) for managing a workflow comprises a plurality of places (P0-P9); a token (W0, W1), the token (W0, W1) representing a deliverable; a transition (T0-T3) between places (P0-P9), the transition (T0-T3) consuming a predetermined token (W0, W1) from a first place (P0-P8) and creating a predetermined token (W0, W1) in a second place (P2-P9).

## Description

Present invention concerns workflow management. More specifically, present invention concerns the way a bigger task is broken up into subtasks and how the resulting tasks are controlled.

### Background of the Invention

A greater physical undertaking like the construction of a bridge or facility management of a big building is usually broken down into a number of smaller tasks that may be carried out by different persons. Some of these tasks may be passed on to a contractor for execution. The contractor, in turn, may subcontract other people for carrying out subtasks for him. Management of the assignment of tasks to persons may become complex as the number of initial tasks or the number of levels of contracting increase.

In a real world it is often a requirement to not only control subtasking - that is, how a task is broken down into subtasks and which task needs completion before what other task can be started - but also to control in which way subtasking is done, that is, who the subcontractors are and under which conditions they work.

### Disclosure of the Invention

A workflow system for managing a workflow comprises a plurality of places; a token, the token representing a deliverable; a transition between places, the transition consuming a predetermined token from a first place and creating a predetermined token in a second place.

The workflow system closely resembles a Petri Net and can be treated as one. This may allow existing methods or tools for verifying, benchmarking or controlling Petri Nets to be used on a workflow.

The token may represent any kind of deliverable related to the workflow, for instance a task to be done, a payment to be made or a permission for accessing a resource. Usually, one token represents one thing to do. In this, it may represent properties of the process at hand like a status or a percentage of completion. When a token is passed on from one place to another, a task may be assigned from one person to another. When a task is completed (or its completion is accepted), the corresponding token may be consumed. In turn, when a task is created, for instance as a fraction of another task, a token is created. A transition may consume and create the same token in different places, thereby actually passing on the token. In a different embodiment, the consumed token may be different from the created token. The token may be considered to be amended while being passed on or the two tokens may be considered to be different in nature.

Every token is bound to a place and preferably all possible or relevant places are defined in advance, i.e. preferably before the first transition of the workflow system is triggered. A special kind of token may exist for the null task, which may be used for representing waiting.

The token reflects a physical task to be done and possibly associated information. It may be realized as a smart contract and be subject to management means on one or more computer systems. For instance, the token may be realized as a data structure and access to it may be restricted to one or more predetermined methods. In one embodiment there are several copies of the token on different computer systems and there may be mechanisms in place to ensure that manipulation of the token is done with the consent of the affected parties. As will be shown in more detail below, a smart contract, once it has been closed, cannot be manipulated unnoticed. For amending the smart contract a dedicated transaction may be required.

The transaction is a logical consequence of one or more conditions. The physical component to execute the transition is preferred to be a computer or similar machine that acts on the token in a predetermined way. As the token may be stored on several computers, there may be a propagation system which ensures that only a legitimately amended token is propagated.

The token is generally associated to a place and the place is an entity that is connected to one or more transactions. Through places and their connections, a topography is defined that models what transitions are possible under given conditions. The place in itself may not be a physical entity, however the structure of places and transitions may define a physical system or machine that works on the token. In a case where the token is represented by or stored on a physical item, the place may also be physical and represent a location or receptacle where the token or its associated item may be put.

The transition may be incorporated as a smart contract, thus mapping a property of the workflow system to a contract in the real world. The smart contract may state a good or service to be delivered by one party and a price to be delivered in exchange by a second party. It may also state conditions like an amount, a time, a quality of a deliverable. The smart contract may make use of an externally accessible resource or information like the presence of some good in some place, a price of something or a time at which something has taken place. This information may be used to automatically cause an effect like the termination of the contract, a change of the price or anything else. The smart contract may be bound to a physical entity so that a change in the smart contract actually affects real world entities.

A transition may take place if all its prerequisites are met. Usually the prerequisites are related to tokens and places. A transition connects the first place with the second place, so for triggering it usually requires a token to be present in the first place. Normally there are either one or zero tokens in one place, so another prerequisite for triggering a transition may be that the second place is free of a token. The token in the first place may be required to be of a predetermined kind or have a predetermined property like a fixed completion status. A transition usually occurs ("fires") as soon as all its prerequisites are met.

The transition may consume predetermined tokens from each of several first places. That is, the transition may be connected to more than one first place and in order to fire, the transition may require a token in several of the connected first places - usually in each of the first places. Additional conditions may be defined as to what token is accepted in which place and what condition or property the token must have.

The transition may create predetermined tokens in each of several second places. In other words the transition may be connected to more than one second place and when firing, it may create a token in more than one of the connected second places. Usually, a token is created in each of the second places. Again, the created tokens are preferred to be predetermined in kind, status or at least one property.

The workflow system may reflect even complex real world workflow scenarios and thus be used to define, verify or manage the execution of a physical enterprise or process.

It is furthermore preferred that one transition may be replaced by another workflow system, that is, a workflow subsystem. As was mentioned above, the transition may conduct a contract. When the transition is replaced by a workflow subsystem, the way of the replacement as well as details on any specific property or element of the workflow subsystem may be defined by the first transition. The first transition may be set up like a master contract (or in German: "Rahmenvertrag" or "Mantelvertrag") that defines conditions of the transitions or contracts it encompasses.

The master contract may define any of the following:
- a purpose or goal of an agreement;
- delivery or performance obligations and acceptance obligations.
- quality requirements;
- a term of a contract, if applicable a notice period;
- prices, and if applicable, a price sliding clause.

This may have great relevance to a real world scenario: a transition (which is a contract) may state the conditions under which it may be broken up and replaced as a workflow subsystem which encompasses at least one sub-transition. That is, the first contract may define to what persons or companies a subcontract may be closed. It may also state conditions of the subcontract, such as a price, what happens if a deliverable is not fulfilled at an agreed time or what qualification a person must have to carry out a given task.

In an example, a workflow system may reflect the general task of facilitating a building. Example tasks may comprise maintenance of a heating system, periodic cleaning of the windows and renting apartments or complete floors to interested parties. The transition associated with heating maintenance may comprise a first place in which, eventually, a task (=token) may be situated which reflects the maintenance action to be carried out, and a second place, in which, when the transition fires, another task may be created that reflects the overhauled condition of the heating. Now, this transition may be replaced or remodelled by another workflow system comprising finer grained tasks. Moreover, it may be defined what person or company may carry out a task or what the maximum acceptable price for a task is. That way, the overall workflow system may encompass the workflow subsystem in defined terms. On the workflow scale it may not be relevant how the workflow subsystem is set up, as long as the predetermined conditions of the transition are met. This allows task delegation and simplification of a management process.

The transition to be replaced by the subsystem may comprise a condition that must be met by all elements of the subsystem. Such a condition may especially concern a transition or a place.

The workflow system may also comprise a party, which may be represented by a person or a company. The party may also be subject to a required condition of a transition, especially a transition of a higher level in the stack of nested workflow systems. The party may be assigned to a place, wherein it may neither be necessary that the party is associated to only one place nor that the assignment is static over the firing of a transition.

The party may influence the status of a token in the place it is assigned to. The transition may require a predetermined status of the token on that place so that manipulation of the token's status may lead to the firing of a transition.

The system may also comprise a ledger, wherein the ledger holds a blockchain. Each transition may be secured through appending a corresponding block to the blockchain. Such a block may comprise a cryptographic operation on characteristic elements of the transition as well as the previous block in the chain. The cryptographic operation may use a public-private-key encryption scheme, especially for cryptographic signatures. Through the ledger, the transition status of a workflow system may be made public and publicly verifiable. The ledger may provide integrity of the transactions and through cryptographic signatures non-repudiation may be provided. For each token, a separate blockchain may be provided. In one embodiment, access to a blockchain may be restricted, e.g. to the parties concerned by the associated transition.

A method for managing a workflow comprises steps of: defining a first place and a second place; defining a token, the token representing a task to be carried out; defining a transition, the transition consuming a predetermined token from the first place and creating a predetermined token in the second place.

The method may especially be carried out, completely or in part, by a computer system. To this ends, the method may be formulated as a computer program product with program code means. The program code means may be executed on a processing unit like the above mentioned computer system or one of its components. The computer program product may also be stored on a computer readable medium like a removable Flash memory stick or card. The above described system may comprise the computer system. Advantages or features of the method may apply to the method and vice versa.

### Brief Summary of the Enclosed Figures

The above-described properties, features and advantages of present invention as well as the way they are achieved will be made clearer and better understandable in the light of the following discussion, making reference to exemplary embodiments shown in accompanying figures, in which
- Fig. 1: shows an exemplary workflow system; and
- Fig. 2: shows a block diagram of a method in one exemplary embodiment.

### Detailed Exemplary Embodiments of the Invention

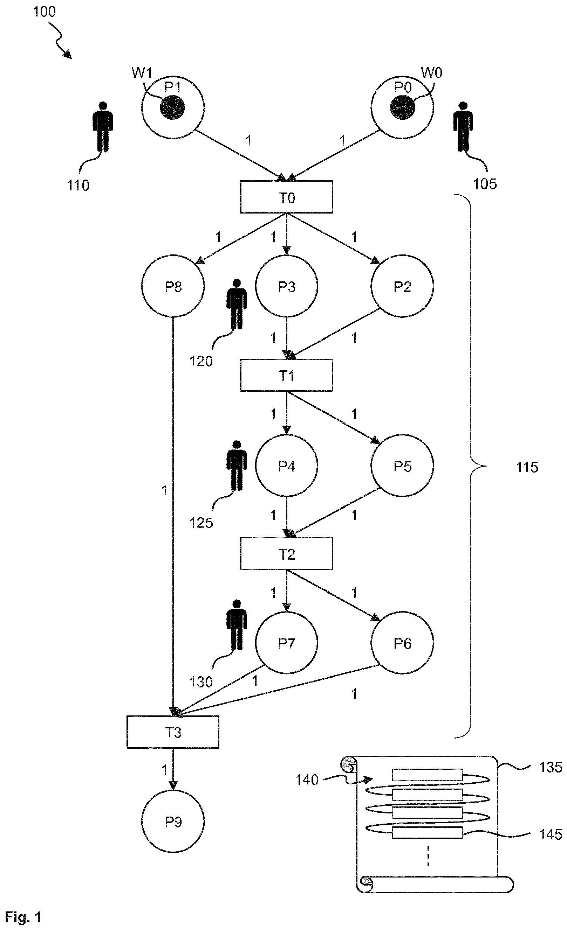

Figure 1 shows an exemplary workflow system 100. The depicted workflow system 100 comprises places P0 through P9, transitions T0 through T3 as well as tokens W0 and W1. Each token W0, W1 stands for a task W0, W1 that needs carrying out.

Optionally, a first person 105 and/or a second person 110 may also be comprised. A person 105, 110 may be assigned to a place P0 - P9. The assignment may be fixed or changeable while the workflow system 100 is running. For the purposes of present example it will be assumed that the first person 105 is assigned (at least) to place P0 and the second person 110 is assigned (at least) to places P1 and P8.

The first person 105 serves as an example for a contractor and the second person 110 as an example for a provider. The provider 110 has task P1 to carry out and the contractor 105 has task P0 to carry out. The relationship between persons 105, 110 and places P0-P9 may also be called a role or phase. Without the notion of persons 105, 110 the tasks W0 and W1 still need to be carried out but ownership of the tasks is not defined. P0 may be the empty task, that is, in present example the contractor 105 has nothing to do but to wait. Task W1 may be a bigger task that can be broken down into subtasks and provider 110 may wish for the contractor 105 to carry out the task. Details of task W1 may be associated to (or stored inside) the corresponding token W1.

Supposing that task W1 was a simple task that contractor 105 can carry out in one step, the depicted workflow system could be simplified to comprise only one transition T0 and only one additional place P9. The contractor 105 could carry out the physical task associated to W1, modify the status of W1 accordingly and transition T0, which may be nothing different than a smart contract, could fire and consume both the waiting token W0 and the working token W1. In turn, it could create a new token in place P9, indicating that work W1 has been carried out.

However, in present example this singular transition T0 is replaced by another exemplary workflow subsystem 115, comprising transitions T0, T1, T2 and T3 and places P2 through P8. The subsystem 115 behaves in principle just like the workflow system 100 in that each of its transitions T0-T3 require certain prerequisites on tokens in places. When the prerequisites are fulfilled, the transition fires consuming the tokens on the input side and creating one or more tokens in each of the places on the output side. In present figure, the input places to a transition T0-T3 are the circles connected on the upper side and the output places are the circles connected on the lower side.

Place P2 is associated to contractor 105 while place P3 is associated to a third person 120 who acts as a first subcontractor to contractor 105. When transition T0 fires it creates tokens both in places P2 and P3. The token in P2 may be the empty or waiting token and the token in P3 represents one subtask to the task W1 it is based on. Parallel to this, another waiting token may be created in place P8, which is associated to provider 110. This means that the provider 110 must wait for task W1 to be completed. Until transition T3 is ready to fire, provider 110 has nothing to do.

The given example constellation as part of the workflow subsystem 115 models that contractor 105 passes on part of the task W1 to first subcontractor 120. When both the contractor P2 and the first subcontractor 120 agree that all deliverables are fulfilled, transition T1 can fire.

A very similar constellation is represented by T1, P4, P5 and T2. Here, a second subtask (i.e. token) is passed to a place P4 which is associated to a fourth person 125 who acts as second subcontractor to contractor 105. Persons 120, 125 may or may not be identical to each other.

Finally, another constellation T2, P6, P7, T3 takes place in which a third subtask is passed to a place P7, which is associated to a fifth person 130 who acts as a third subcontractor to contractor 105. Person 130 may be identical to one of the other persons 120, 125. In fact, any of persons 120 through 130 may also be identical to one of persons 105, 110 in another embodiment.

Transition T3 fires when all participating parties (i.e. all persons 105, 110, 130 associated to input places P6, P7, P8 to the transition T3) agree that the deliverables have been fulfilled. In this case, T3 makes one final transition to workflow system 100 and creates one last token in place P9, the presence of which indicates that all tasks have been carried out and the workflow system 100 has finished running or being executed.

In present example, task W1 is first passed from provider 110 to consumer 105 who breaks it down into subtasks that are consecutively carried out by subcontractors 120-130 (in places P3, P4, P7). The final work result is presented to the provider 110 before task execution in system 100 terminates. It is to be noted that other implementations may be more complex and comprise constellations like loops and may not be intended to terminate.

To provider 110 the situation does not change by introducing the workflow subsystem 115. However, the hypothetical fist and only transition T0/T3, which was replaced by subsystem 115, may dictate conditions that are to be applied to everything that lies inside the subsystem 115. For instance, the initial transition may prescribe that only persons 105, 120-130 may be employed to work on any task derived from W1. Restrictions may also be made to child transitions T1, T2: how small or large may a subtask be? What price is acceptable? What is the maximum number of subcontractors 120-130? How many subcontractors 120-130 may work in parallel? Is a contractor 105 allowed to hire a subcontractor? What is the maximum acceptable number of nested levels of subcontracting? These and other circumstances of work on subtasks may be defined inside a smart master contract T0/T3 to which enclosed transitions T1, T2 must comply.

In another embodiment the master contract T0/T3 may only state an overall goal and make no further restrictions on how the goal is to be reached. In present example W1 may comprise transportation of predetermined goods from a first place to a second place. Contractor 105 may be a professional mover who employs a truck (P3), a ship (P4) and another truck (P7) to deliver the goods at its final destination. The master contract T0/t3 may require each subcontractor 120-130 to move the goods closer to the destination but it may remain open how much closer.

The workflow system 100 is preferred to comprise a ledger 135, holding a blockchain 140 of blocks 145 that are cryptographically kept in a predetermined sequence. Each block 145 represents a signed cryptographic hash over the status of a transition T0-T3. As a transition occurs or fires, a block representing the event is appended to the blockchain 140. Access of contents of the ledger 135 may be open or restricted. The ledger 135 may be embodied as a computer server, preferably on a computer network.

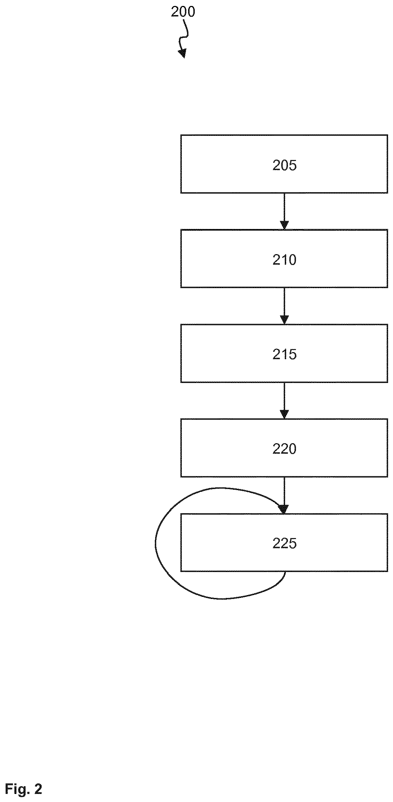

Figure 2 shows a block diagram of a method 200 in one exemplary embodiment. Method 200 may reflect or work on system 100 of figure 1.

In a first step 205, at least one first place P0-P9 and at least one second place P0-P9 is defined. A first place P0-P7 may act as an input place to a given transition T0-T3 and a second place P2-P9 may act as an output place to it.

In a step 210, at least one token W0, W1 is defined. Every token W0, W1 stands for a task to be carried out and may reflect a physical good like an item, a service, a permission or a value. Each task W0, W1 may be broken down into one or more subtasks that may have a predetermined sequence of execution. A task W0, W1 is always associated to a place P0-P9.

In a step 215, at least one transition T0-T3 is defined. Each transition T0-T3 may be reflected as a smart contract that is fulfilled if appropriate tokens W0, W1 are present in connected input places and, possibly, all conditions to those tasks or tokens W0, W1 are fulfilled. Once a transition T0-T3 is fulfilled, it consumes the tokens W0, W1 from its connected input places P0-P7 and creates one or more tokens on at least one connected output place P2-P9.

In an optional step 220, one or more persons 105, 110, 120-130 are defined and associated to one or more places P0-P9 each. This association creates a responsibility for a task W0, W1 if it is located in the respective place P0-P9.

In a step 225, the workflow system 100 is started and runs until it reaches a special stop condition or is externally stopped. While the workflow system 100 runs, every transition T0-T3 that is ready to fire fires, potentially giving rise to other responsibilities, work to do or transitions to occur.

Even though present invention has been illustrated and explained in detail above with reference to the preferred embodiments, the invention is not to be construed as limited to the given examples. Variants or alternate combinations of features given in different embodiments may be derived by a subject matter expert without exceeding the scope of present invention.

## Claims

1. Workflow system (100) for managing a workflow wherein the system (100) comprises:
- a plurality of places (P0-P9);
- a token (W0, W1), the token (W0, W1) representing a deliverable;
- a transition (T0-T3) between places (P0-P9), the transition (T0-T3) consuming a predetermined token (W0, W1) from a first place (P0-P8) and creating a predetermined token (W0, W1) in a second place (P2-P9).

2. Workflow system (100) according to claim 1, wherein the transition (T0-T3) consumes predetermined tokens (W0, W1) from each of several first places (P0-P8).

3. Workflow system (100) according to claim 1 or 2, wherein the transition (T0-T3) creates predetermined tokens (W0, W1) in each of several second places (P2-P9).

4. Workflow system (100) according to one of the previous claims, wherein a transition (T0-T3) can be recursively represented by a workflow subsystem (115).

5. Workflow system (100) according to claim 4, wherein the transition (T0-T3) to be replaced by the subsystem (115) comprises a condition that must be met by all elements of the subsystem (115).

6. Workflow system (100) according to one of the previous claims, further comprising a party, the party being assigned to at least one place (P0-P9).

7. Workflow system (100) according to claim 6, wherein the party may influence the status of a token (W0, W1) in the assigned place (P0-P9); and the transition (T0-T3) requires a predetermined status of a token (W0, W1) in a first place (P0-P9) to occur.

8. Workflow system (100) according to one of the previous claims, further comprising a ledger (135), the ledger (135) holding a blockchain (140), wherein each transition (T0-T3) is secured through appending a block (145) to the blockchain (140).

9. Method for managing a workflow, wherein the method comprises steps of:
- defining (205) a first place (P0-P8) and a second place (P2-P9);
- defining (210) a token (W0, W1), the token (W0, W1) representing a task to be carried out;
- defining (215) a transition (T0-T3), the transition (T0-T3) consuming a predetermined token (W0, W1) from the first place (P0-P8) and creating a predetermined token (W0, W1) in the second place (P2-P9).

10. Computer program product, comprising program code means to execute a method according to claim 9, wherein the computer program product is executed on a processing unit or stored on a computer readable medium.
